# EUROPEAN PATENT SPECIFICATION

(11) **EP 4 013 128 B1**
(45) Date of publication and mention of the grant of the patent: **08.01.2025**
(21) Application number: 20865993.8
(22) Date of filing: 21.08.2020
(51) Int. Cl.: H04W 48/18, H04L 41/40, H04L 41/0894, H04L 41/0895, H04W 8/02, H04W 8/18, H04L 41/0806, H04L 41/0896, H04L 41/5041

(54) **METHOD, APPARATUS, AND SYSTEM FOR SELECTING NETWORK SLICE, AND STORAGE MEDIUM**
VERFAHREN, VORRICHTUNG UND SYSTEM ZUR AUSWAHL VON NETZWERK-SLICES UND SPEICHERMEDIUM
PROCÉDÉ, APPAREIL ET SYSTÈME DE SÉLECTION DE TRANCHE DE RÉSEAU, ET SUPPORT D'INFORMATIONS

(30) Priority: 20.09.2019 CN 201910893527
(43) Date of publication of application: 15.06.2022
(73) Proprietor: ZTE Corporation, Shenzhen, Guangdong 518057 (CN)
(72) Inventor: ZHOU, Junchao, Shenzhen, Guangdong 518057 (CN); FANG, Yanwei, Shenzhen, Guangdong 518057 (CN); CAI, Jiannan, Shenzhen, Guangdong 518057 (CN)
(74) Representative: Swindell & Pearson Limited
(86) International application number: PCT/CN2020/110492
(87) International publication number: WO 2021/052107

(56) References cited:
- WO-A1-2018/035694
- WO-A1-2018/175498
- CN-A- 106 982 458
- US-A1- 2019 053 104
- US-A1- 2019 053 148
- US-A1- 2019 124 561
- US-A1- 2019 230 556
- ZTE, ORACLE, ...: "23.502: Network Slicing Roaming Support (OI#2 and OI#3)", 3GPP DRAFT; S2-177038 NETWORK SLICING ROAMING 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Ljubljana, Slovenia; 20171023 - 20171027, 17 October 2017 (2017-10-17), Mobile Competence Centre ; 650, route des Lucioles ; F-06921 Sophia-Antipolis Cedex ; France, XP051359733
- NEC: "NSSF uses NWDAF's Service to select network slice(s)", 3GPP DRAFT; S2-184732 NSSF USES NWDAF&APOS;S SERVICE TO SELECT NETWORK SLICE(S) V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Newport Beach, US; 20180528 - 20180601, 21 May 2018 (2018-05-21), Mobile Competence Centre ; 650, route des Lucioles ; F-06921 Sophia-Antipolis Cedex ; France, XP051535291

## Description

### TECHNICAL FIELD

Embodiments of the present disclosure relate to the field of communications technologies, and in particular, to a network slice selection method, apparatus, and system, and computer-readable storage medium.

### BACKGROUND

Network slicing is a new technology and architecture for communications network services defined based on Network Function Virtualization (NFV) and Software-Defined Networking (SDN) technologies. The network slicing constructs an isolated end-to-end logical communications network based on virtual or physical resources, to provide users with one or more specific communications network services as needed.

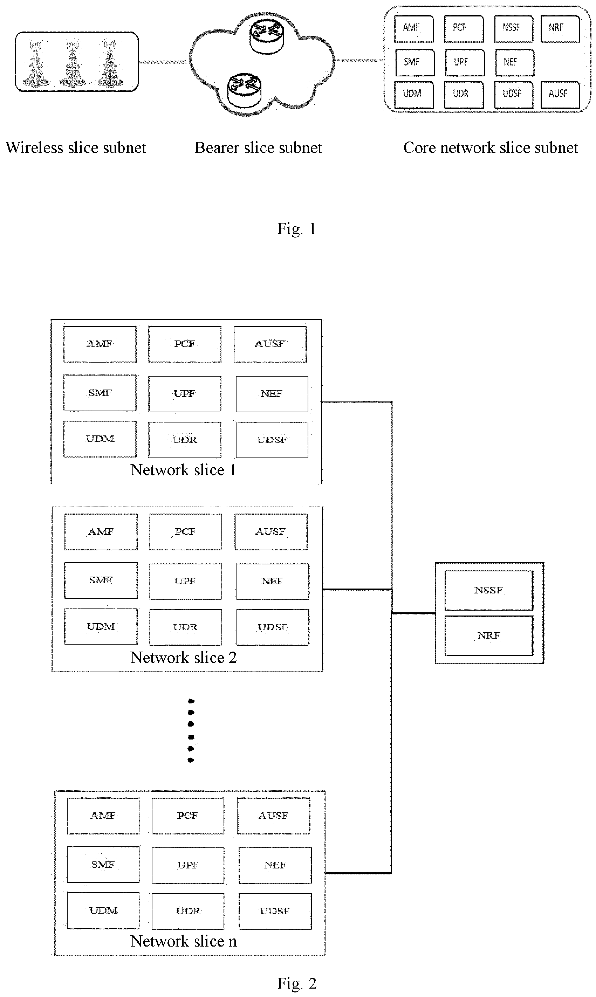

In a 5G system, as shown in Fig. 1, one complete network slice generally consists of a core network slice subnet, a bearer slice subnet, and a wireless slice subnet, and is an end-to-end logical network. In this typical network slice networking architecture, each network slice instance is deployed with a network slice selection function (NSSF) network element for slice selection. During the user's roaming between slices, an NSSF at a visited location and an NSSF at a home location interact to complete slice instance selection at the visited location and the home location for the user.

The inventors have found at least the following problems existing in the situation described above: during practical engineering application and deployment, it is not necessary to deploy the NSSF in every network slice instance, and instead, multiple network slice instances can share one NSSF; however, how the shared NSSF can realize slice selection at the visited location and the home location for the user in such deployment scenarios is not described in the current technical specifications.

In US 2019/053104A1, systems, apparatuses, and methods are described for wireless communications. Network slicing may be used to provide services for a wireless device. A network slice may be determined for the wireless device based on a required bandwidth for the network slice and/or charging information for the network slice.

### SUMMARY

An embodiment of the present disclosure provides a network slice selection method, applied to an NSSF network element, where the NSSF is shared by a plurality of network slices in a core network. The features of the method according to embodiments of the present disclosure are set out in the appended set of claims.

An embodiment of the present disclosure further provides a network slice selection apparatus, where the selection apparatus is shared by a plurality of network slices in a core network. The features of the selection apparatus according to embodiments of the present disclosure are set out in the appended set of claims.

An embodiment of the present disclosure further provides a network slice selection function network element, including: at least one processor; and a memory communicatively connected to the at least one processor, where the memory stores instructions executable by the at least one processor, and the instructions are executed by the at least one processor to enable the at least one processor to execute the foregoing network slice selection method.

An embodiment of the present disclosure further provides a network slice selection system, including: a plurality of network slices in a core network and the foregoing network slice selection function network element, where the network slice selection function network element is connected to each of the plurality of network slices in the core network.

An embodiment of the present disclosure further provides a computer-readable storage medium storing a computer program which, when executed by a processor, implements the foregoing network slice selection method.

### BRIEF DESCRIPTION OF DRAWINGS

One or more embodiments are illustrated by using figures in the corresponding drawings, and these illustrations do not constitute limitations on the embodiments.
Fig. 1 is a schematic diagram of an architecture of a complete network slice according to the existing technology;
Fig. 2 is a schematic diagram of a structure in which an NSSF is shared by multiple core network slices according to the first embodiment of the present disclosure;
Fig. 3 is a flowchart of a network slice selection method according to the first embodiment of the present disclosure;
Fig. 4 is an interactive flowchart of a network slice selection method according to the first embodiment of the present disclosure;
Fig. 5 is a flowchart of a network slice selection method according to the second embodiment of the present disclosure;
Fig. 6 is a block diagram of a structure of a network slice selection apparatus according to the third embodiment of the present disclosure;
Fig. 7 is a block diagram of a structure of a network slice selection function network element according to the fourth embodiment of the present disclosure; and
Fig. 8 is a block diagram of a structure of a network slice selection system according to the fifth embodiment of the present disclosure.

### DETAILED DESCRIPTION

In order to make the purposes, technical schemes and advantages of the embodiments of the present disclosure clear, the embodiments of the present disclosure will be described in detail with reference to the accompanying drawings. Those having ordinary skill in the art can understand that, in various embodiments of the present disclosure, many technical details have been set forth in order to enable readers to better understand the present disclosure. However, even without these technical details and various changes and modifications based on the following embodiments, the technical schemes of the present disclosure can be implemented. The following embodiments are divided for convenience of description, and should not constitute any limitation on the specific implementation of the present disclosure. The embodiments can be combined with and referenced by each other with no conflict.

The first embodiment of the present disclosure relates to a network slice selection method, which is applied to an NSSF network element, and the NSSF is shared by multiple network slices in a core network.

The 3rd Generation Partnership Project (3GPP) standard defines that a core network slice subnet consists of multiple core network element instances, such as an Access and Mobility Management Function (AMF) network element, a Session Management Function (SMF) network element, a User Plane Function (UPF) network element, a Policy Control Function (PCF) network element, a Unified Data Management (UDM) network element, an Authentication Server Function (AUSF) network element, an unstructured data storage function (UDSF) network element, a Unified Data Repository (UDR) network element, a Network Repository Function (NRF) network element, a Network Slice Selection Function (NSSF) network element, and a Network Exposure Function (NEF) network element. However, in this embodiment, there is no need to deploy the NSSF in each core network slice subnet, but multiple network slices share one NSSF. As shown in Fig. 2, the NSSF is shared by multiple network slices in the core network (the NRF in the schematic diagram can be deployed together with the NSSF or deployed in different slice instances), and other core network elements are exclusive to each core network slice. In this deployment scenario, a visited location and a home location share the NSSF, and slice instance selection of a user at the visited location and the home location is completed by the shared NSSF.

The network slice selection method of the embodiment is applied to the NSSF network element, and includes: receiving a slice selection request, where the slice selection request is used for requesting to select a network slice for a roaming user, and the slice selection request includes user information; determining a target network slice according to a preset roaming policy and the user information; and sending a response message for the slice selection request, where the response message carries identification information of the target network slice.

Implementation details of the network slice selection method in this embodiment are described in detail below. The following contents are only provided for convenience of understanding, and are not necessary for the implementation of this scheme.

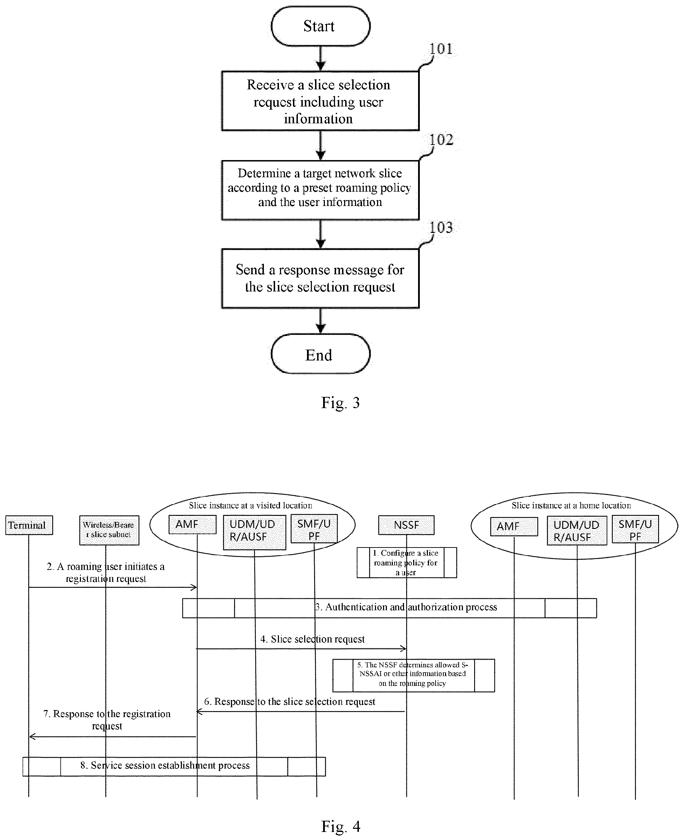

Fig. 3 shows a flowchart of a network slice selection method according to an embodiment, and the method includes the following steps:
At step 101, a slice selection request including user information is received.

The user information includes single network slice selection assistance information (S-NSSAI) of a network slice at which a user is currently located, and one or any combination of the following information: location information of the user, a subscription permanent identifier (SUPI) of the user, or information about a default access and mobility management function (AMF) network element at a visited location of the user.

In an implementation, the slice selection request received by an NSSF is sent by the default AMF at the visited location of the user. Fig. 4 is an interactive flowchart of network slice selection during a user's roaming. As shown in Fig. 4, when the roaming user needs to slice to be selected, a user terminal performs step 2, that is, sends a registration request initiated by the roaming user. The registration request is received by a default AMF at the visited location after passing a wireless slice subnet and a bearer slice subnet. The registration request carries requested S-NSSAI (S-NSSAI of a network slice at which the user is currently located), the location information of the user, the SUPI of the user, or the like. After receiving the registration request from the user, the default AMF at the visited location performs step 3. To be specific, the default AMF at the visited location interacts with a UDM/AUSF/UDR at a home location of the user to complete an authentication and authorization process for the user and obtain information about subscribed S-NSSAI of the user (the S-NSSAI of the network slice at which the user is currently located). Then, the default AMF at the visited location performs step 4, that is, sends the slice selection request to the NSSF, where the slice selection request carries the information carried in the above registration request and further includes the information about the default AMF at the visited location.

At step 102, a target network slice is determined according to a preset roaming policy and the user information. The roaming policy includes multiple groups of configuration information, and each group of configuration information corresponds to one of the network slices. That a target network slice is determined according to a preset roaming policy and the user information includes: searching, according to the user information, the roaming policy for a group of configuration information matching the user information; and determining a network slice corresponding to the found group of configuration information as the target network slice.

In an implementation, as shown in Fig. 4, the NSSF performs step 1, that is, configures the user roaming policy in advance.

Each group of configuration information includes S-NSSAI of the corresponding network slice, and one or any combination of the following information: location information of the corresponding network slice, a SUPI of a subscriber of the corresponding network slice, or preset AMF information.

In response to finding multiple groups of configuration information matching the user information in the roaming policy according to the user information, one group of configuration information is randomly selected from the found multiple groups of configuration information; and the randomly selected group of configuration information is used as the group of configuration information matching the user information.

In an implementation, as shown in Fig. 4, the NSSF performs step 5, that is, determines allowed S-NSSAI (S-NSSAI of the target network slice) or other information based on the roaming policy.

At step 103, a response message for the slice selection request is sent.

The response message carries identification information of the target network slice, and the identification information of the target network slice includes the S-NSSAI of the target network slice and mapped S-NSSAI.

In an implementation, the NSSF sends the response message for the slice selection request to the default AMF at the visited location of the user. As shown in Fig. 4, the NSSF performs step 6, that is, sends the response message for the slice selection request to the default AMF at the visited location of the user, where the response message carries the allowed S-NSSAI (the S-NSSAI of the target network slice), the mapped S-NSSAI (the S-NSSAI of the current network slice of the user), and other information to be used at the visited location. After receiving the response message for the slice selection request, the default AMF at the visited location performs step 7, that is, sends a response message for the registration request to the user through the wireless slice subnet and the bearer slice subnet. The response message for the registration request carries the information carried in the response message for the slice selection request. After receiving the response message for the registration request, the user performs step 8, that is, initiates a subsequent session establishment process based on the allowed S-NSSAI (the S-NSSAI of the target network slice) in the response message.

In an implementation, a specific configuration method of the roaming policy is as follows: a configuration information table for the roaming policy is added, and operators configure the roaming policies according to specific needs, including but not limited to the following policies:
Roaming policy scheme I: The configuration information table for the roaming policy is designed based on the slice instances and location information managed by the NSSF and a specific roaming policy is configured, as shown in Table 1:

**Table 1**

| | | | | | | |
|---|---|---|---|---|---|---|
| Slice instance identifier | Location information | NRF information | AMF information | AMF SetID | S-NSSAI | Mapped S-NSSAI |
| | | | | | | |

Roaming policy scheme II: The roaming policy table is designed based on a SUPI number segment for the user and the AMF information and a specific roaming policy is configured, as shown in Table 2:

**Table 2**

| | | | | | | |
|---|---|---|---|---|---|---|
| SUPI information | AMF information | AMF SetID | Location information | NRF information | S-NSSAI | Mapped S-NSSAI |
| | | | | | | |

The slice instance identifier is a slice instance identifier during specific deployment and uniquely identifies the slice instance. The location information is the location information of the slice instance service, for example, NRF information such as a Zone Code (ZC) list, a Routing Area Code (RAC) list, or a Tracking Area Code (TAC) list. The SUPI information is SUPI number segment information serving the slice instance, or NRF identifier or address information serving the slice instance. The AMF information is an AMF identifier or address information serving the slice instance. The AMF SetID is AMF set identifier information serving the slice instance. The S-NSSAI is S-NSSAI information serving the slice instance. The mapped S-NSSAI is S-NSSAI of a home slice mapped after the user roams to the current slice.

Based on the configuration information table for the roaming policy, when the NSSF receives the slice selection request sent by the AMF, the NSSF finds a group of configuration information and configuration information matching the user information carried in the slice selection request in the configuration information table for the roaming policy, determines the target network slice for the user according to the configuration information, and returns the allowed S-NSSAI information, the configured S-NSSAI, the mapped S-NSSAI, the NRF identifier information or slice instance identifier information after decision-making.

In this embodiment, in the case that multiple network slices share the NSSF network element, when the NSSF receives the slice selection request from the roaming user, the NSSF determines, according to the preset roaming policy and the user information in the slice selection request, a target network slice to which the user is to switch. Through the preset roaming policy, the shared NSSF can properly select a network slice for the roaming user. Compared with the existing technology, this embodiment effectively solves the network slice selection problem when the user roams between network slices, effectively supplementing and improving the standard protocol.

The second embodiment of the present disclosure relates to a network slice selection method, which is applied to an NSSF network element, and the NSSF is shared by multiple network slices in a core network. The method includes: receiving a slice selection request, where the slice selection request is used for requesting to select a network slice for a roaming user, and the slice selection request includes user information; searching, according to the user information and a priority of each item of configuration information, the roaming policy for a group of configuration information matching the user information; determining a network slice corresponding to the found group of configuration information as a target network slice; and sending a response message for the slice selection request, where the response message carries identification information of the target network slice.

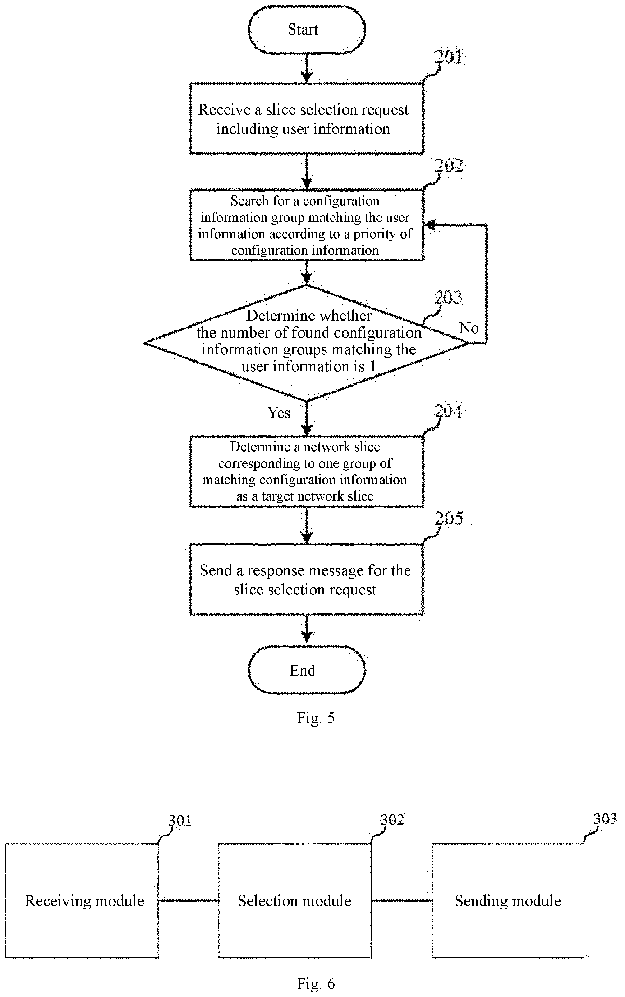

Fig. 5 shows the flowchart of a network slice selection method in this embodiment. The method includes the following steps:
At step 201, a slice selection request including user information is received. This step is similar to step 101 in the first embodiment, and details are not described herein again.

At step 202, a configuration information group matching the user information is searched for according to a priority of configuration information. The user information includes S-NSSAI of a network slice at which a user is currently located, and one or any combination of the following information: location information of the user, a SUPI of the user, or information about a default AMF network element at a visited location of the user. Each group of configuration information includes S-NSSAI of the corresponding network slice, and one or any combination of the following information: location information of the corresponding network slice, a SUPI of a subscriber of the corresponding network slice, or preset AMF information.

Items of configuration information in each group of configuration information are set with different priorities respectively. The configuration information group matching the user information is searched for in descending order of the priorities of the items of configuration information. Once found, the found configuration information group is searched based on a next level of priorities.

At step 203, it is determined whether the number of found configuration information groups matching the user information is 1. If it is 1, the process proceeds to step 204; if it is not 1, the process proceeds to step 202.

At step 204, a network slice corresponding to one group of matching configuration information is determined as a target network slice.

At step 205, a response message for the slice selection request is sent. This step is similar to step 103 in the first embodiment, and details are not described herein again.

In an implementation, the roaming policy scheme II (the roaming policy table is designed based on a SUPI number segment for the user and the AMF information and a specific roaming policy is configured) in the first embodiment is used as the roaming policy, and priorities are set for the configuration information in the configuration information table for the roaming policy. The SUPI number segment for the user is set as a first priority, the AMF information is set as a second priority, and the mapped S-NSSAI is set as a third priority. The configuration information table for the roaming policy is shown in Table 3:

**Table 3**

| Slice instance identifier | SUPI information | AMF information | AMF SetID | S-NSSAI | Mapped S-NSSAI |
|---|---|---|---|---|---|
| NSID-NJ-ZTE-eMBB-01 | 4600301∼4600311 | 210.47.115.68 | NJ-AMFSET-01 | 0100000 1 | 0100000 2 |
| NSID-NJ-ZTE-eMBB-02 | 4600321∼4600331 | 220.116.15.95 | NJ-AMFSET-02 | 0100000 2 | 0100000 1 |
| NSID-NJ-ZTE-eMBB-03 | 4600321∼4600331 | 220.116.15.95 | NJ-AMFSET-02 | 0100000 3 | 0100000 2 |

In this case, when a user of NSID-NJ-ZTE-eMBB-01 needs a slice to be selected during roaming, specific steps are as follows:
The user initiates a registration request through a wireless slice subnet and a bearer slice subnet, where the request message carries requested S-NSSAI (01000001), SUPI information (4600321) of the user, default AMF information (220.116.15.95) at a visited location of the user, and other information.

The default AMF at the visited location interacts with a UDM/AUSF/UDR at a home location to complete an authentication and authorization process for the user and obtain the subscribed S-NSSAI (01000001) of the user.

The default AMF at the visited location sends the slice selection request message to the NSSF, where the request message carries the requested S-NSSAI (01000001), the SUPI information (4600321) of the user, the default AMF information (220.116.15.95) at the visited location of the user, and other information.

The shared NSSF determines the target network slice according to the information in the request message and a local roaming policy as follows: matching network slices NSID-NJ-ZTE-eMBB-02 and NSID-NJ-ZTE-eMBB-03 are determined according to the SUPI information of the first priority; the matching network slices NSID-NJ-ZTE-eMBB-02 and NSID-NJ-ZTE-eMBB-03 are further determined among the already matching network slices according to the AMF information of the second priority, where at this time, the number of matching network slices is not 1; then the matching network slices NSID-NJ-ZTE-eMBB-02 (the S-NSSAI carried in the corresponding request message of the mapped S-NSSAI) are further determined among the already matching network slices according to the mapped S-NSSAI of the third priority; and the network slice with the slice instance identifier of NSID-NJ-ZTE-eMBB-02 is determined as the target network slice.

The shared NSSF returns a slice selection response message to the default AMF at the visited location, where the message carries the allowed S-NSSAI (01000002), the configured S-NSSAI (for example, 01000002), the mapped S-NSSAI (for example, 01000001), and other information of the above target network slice.

The default AMF at the visited location replies to the user with a response message for the registration request through the wireless slice subnet and the bearer slice subnet, where the message carries the allowed S-NSSAI (01000002), the configured S-NSSAI (01000002), the mapped S-NSSAI (for example, 01000001) and other information used by the terminal user at the visited location.

Based on the allowed S-NSSAI (01000002), the user initiates a subsequent session establishment process and other processes.

In this embodiment, in the case that multiple network slices share the NSSF network element, the NSSF receives the slice selection request from the roaming user; searches, according to the user information in the slice selection request and a priority of each item of configuration information, the roaming policy for a group of configuration information matching the user information; and determines the network slice corresponding to the found group of configuration information as the target network slice to which the user is to switch. Through the preset roaming policy, the shared NSSF can properly select a network slice for the roaming user. Compared with the existing technology, this embodiment effectively solves the network slice selection problem when the user roams between network slices, effectively supplementing and improving the standard protocol.

The third embodiment of the present disclosure relates to a network slice selection apparatus, which is shared by multiple network slices in a core network. The selection apparatus includes a receiving module 301, a selection module 302, and a sending module 303, of which specific structures are shown in Fig. 6.

The receiving module 301 is configured to receive a slice selection request, where the slice selection request is used for requesting to select a network slice for a roaming user, and the slice selection request includes user information. The selection module 302 is configured to determine a target network slice according to a preset roaming policy and the user information. The sending module 303 is configured to send a response message for the slice selection request, where the response message carries identification information of the target network slice.

In an implementation, the roaming policy includes multiple groups of configuration information, and each group of configuration information corresponds to one of the network slices; and That a target network slice is determined according to a preset roaming policy and the user information includes: searching, according to the user information, the roaming policy for a group of configuration information matching the user information; and determining a network slice corresponding to the found group of configuration information as the target network slice.

In an implementation, the user information includes S-NSSAI of a network slice at which the user is currently located, and one or any combination of the following information: location information of the user, a SUPI of the user, or information about a default AMF network element at a visited location of the user. Each group of configuration information includes S-NSSAI of the corresponding network slice, and one or any combination of the following information: location information of the corresponding network slice, a SUPI of a subscriber of the corresponding network slice, or preset AMF information.

In an implementation, items of configuration information in each group of configuration information are set with different priorities respectively; and searching, according to the user information, the roaming policy for a group of configuration information matching the user information includes: sequentially searching, in descending order of the priorities of the items of configuration information, for configuration information matching the user information until one group of configuration information in which all items of configuration information match the user information is found.

In an implementation, searching, according to the user information, the roaming policy for a group of configuration information matching the user information includes: selecting, in response to finding multiple groups of configuration information matching the user information in the roaming policy according to the user information, a group of configuration information randomly from the found multiple groups of configuration information; and using the randomly selected group of configuration information as the group of configuration information matching the user information.

In an implementation, the identification information of the target network slice includes S-NSSAI of the target network slice and mapped S-NSSAI.

It is not difficult to find that this embodiment is an apparatus embodiment corresponding to the first embodiment, and this embodiment can be implemented in cooperation with the first embodiment. The related technical details mentioned in the first embodiment are still effective in this embodiment, and details are not described herein again to reduce repetition. Accordingly, the related technical details mentioned in this embodiment can also be applied to the first embodiment.

It is worth mentioning that all the modules involved in this embodiment are logic modules. In practical applications, a logic unit may be a physical unit or a part of a physical unit, or be implemented by a combination of multiple physical units. In addition, in order to highlight the innovative part of the present disclosure, units that are not closely related to solving the technical problem proposed by the present disclosure are not introduced in this embodiment, but this does not mean that there are no other units in this embodiment.

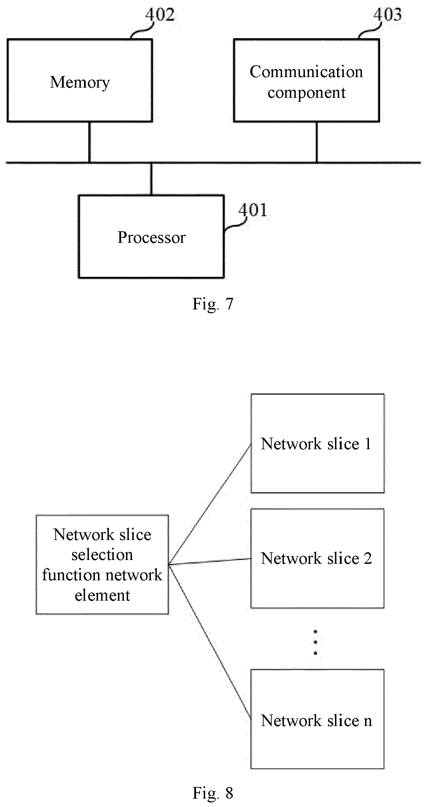

The fourth embodiment of the present disclosure relates to a network slice selection function network element. As shown in Fig. 7, the network slice selection network element includes at least one processor 401, a memory 402 communicatively connected to the at least one processor 401, and a communication component 403 communicatively connected to the network slice selection function network element. The communication component 403 receives and sends data under control of the processor 401. The memory 402 stores instructions executable by the at least one processor 401, and the instructions are executed by the at least one processor 401 to implement the above-mentioned network slice selection method embodiment.

The electronic device includes one or more processors 401 and a memory 402. One processor 401 is used as an example in Fig. 6. The processor 401 and the memory 402 may be connected by a bus or in other ways. In Fig. 6, the connection is realized by a bus for example. The memory 402 is used as a computer-readable storage medium, and is configured to store a computer software program, a computer-executable program, and a module. By running the computer software program, instructions, and the module stored in the memory 402, the processor 401 executes various functional applications and data processing of the device, that is, implements the above-mentioned network slice selection method.

The memory 402 may include a program storage area and a data storage area, where the program storage area may store an operating system and application program(s) required by at least one function, and the data storage area can store a list of options, and the like. In addition, the memory 402 may include a high-speed random access memory and a non-volatile memory, for example, at least one magnetic disk storage device, a flash memory device, or another non-volatile solid-state storage device. In some embodiments, the memory 402 may optionally include memories remotely located with respect to the processor 401, and these remote memories may be connected to external devices via a network. Examples of the above-mentioned network include the Internet, an intranet, a local area network, a mobile communication network, and a combination thereof.

One or more modules are stored in the memory 402, and when executed by the one or more processors 401, performs the network slice selection method in any of the above method embodiments.

The above products can implement the method provided by the embodiment of the present disclosure, and have corresponding functional modules for implementing the method and beneficial effects thereof. For technical details not described in detail in this embodiment, refer to the method provided by the embodiment of the present disclosure.

The memory and the processor are connected through a bus. The bus may include any number of interconnected buses and bridges. The bus connects the one or more processors and various circuits of the memory. The bus may also connect various other circuits such as a peripheral device, a voltage regulator and a power management circuit, which are well known in the art and therefore will not be further described here. A bus interface provides an interface between the bus and a transceiver. The transceiver may be one element or multiple elements, such as multiple receivers and transmitters, and provide a unit for communicating with various other apparatuses on a transmission medium. Data that has been processed by the processor is transmitted on a wireless medium by means of an antenna. Further, the antenna also receives data and transmits the data to the processor.

The processor is responsible for bus management and general processing, and may also provide various functions, including timing, peripheral interface, voltage regulation, power management and other control functions. The memory may be configured to store data used by the processor when performing operations.

As shown in Fig. 8, the fifth embodiment of the present disclosure relates to a network slice selection system, which includes multiple network slices in a core network and a network slice selection function network element, where the network slice selection function network element is connected to each of the multiple network slices in the core network and shared by the network slices in the core network.

The network slice selection function network element in this embodiment is the same as the network slice selection function network element in the fourth embodiment, and details are not described herein again.

In this embodiment, in the case that multiple network slices share the NSSF network element, when the NSSF receives a slice selection request from a roaming user, the NSSF determines, according to a preset roaming policy and user information in the slice selection request, a target network slice to which the user is to switch. This effectively solves the network slice selection problem when the user roams between network slices, thereby effectively supplementing and improving the standard protocol.

The sixth embodiment of the present disclosure relates to a computer-readable storage medium storing a computer program. The computer program, when executed by a processor, implements the above network slice selection method embodiment.

Those having ordinary skill in the art can understand that all or some of the steps in the methods for implementing the above embodiments can be completed by instructing related hardware through a program, which is stored in a storage medium and includes several instructions configured to enable a device (which may be a single-chip microcomputer, a chip, etc.) or a processor to execute all or some of the steps of the methods according to the embodiments of the present disclosure. The aforementioned storage medium includes: various media that can store program codes, such as a USB flash drive, a mobile hard disk, a read-only memory (ROM), a random access memory (RAM), a magnetic disk or an optical disk.

Those having ordinary skill in the art can understand that the above embodiments are specific embodiments for implementing the present disclosure, but in practical applications, various changes in form and detail can be made therein without departing from the principle and scope of the present disclosure.

## Claims

1. A network slice selection method applicable to a network slice selection function, NSSF, network element shared by a plurality of network slices in a core network, the method comprising:
receiving a slice selection request, wherein the slice selection request is adopted for requesting to select a network slice for a roaming user, and the slice selection request comprises user information belonging to the roaming user (101);
searching, according to the user information, a preset roaming policy for a group of configuration information matching the user information, wherein the roaming policy comprises a plurality of groups of configuration information, and each group of configuration information corresponds to one of the network slices;
determining a network slice corresponding to the found group of configuration information as a target network slice (102); and
sending a response message for the slice selection request, wherein the response message carries identification information of the target network slice (103).

2. The network slice selection method of claim 1, wherein:
the user information comprises single network slice selection assistance information, S-NSSAI, for a network slice at which the user is currently located, and one or any combination of the following information: location information of the user, a subscription permanent identifier, SUPI, of the user, or information about a default access and mobility management function, AMF, network element at a visited location of the user; and
each group of configuration information comprises S-NSSAI of the corresponding network slice, and one or any combination of the following information: location information of the corresponding network slice, a SUPI of a subscriber of the corresponding network slice, or preset AMF information.

3. The network slice selection method of claim 1, wherein:
items of configuration information in each group of configuration information are set with different priorities, respectively; and
searching, according to the user information, the roaming policy for a group of configuration information matching the user information comprises:
sequentially searching, in descending order of the priorities of the items of configuration information, for configuration information matching the user information until the number of groups of configuration information matching the user information is 1.

4. The network slice selection method of claim 1, wherein searching, according to the user information, the roaming policy for a group of configuration information matching the user information comprises:
selecting, in response to finding a plurality of groups of configuration information matching the user information in the roaming policy according to the user information, a group of configuration information randomly from the found groups of configuration information; and
using the randomly selected group of configuration information as the group of configuration information matching the user information.

5. The network slice selection method of claim 1, wherein the identification information of the target network slice comprises S-NSSAI of the target network slice and mapped S-NSSAI.

6. A network slice selection apparatus, which is shared by a plurality of network slices in a core network, the selection apparatus comprising:
a receiving module (301) configured to receive a slice selection request, wherein the slice selection request is adopted for requesting to select a network slice for a roaming user, and the slice selection request comprises user information belonging to the roaming user;
a selection module (302) configured to search a preset roaming policy for a group of configuration information matching the user information, wherein the roaming policy comprises a plurality of groups of configuration information, and each group of configuration information corresponds to one of the network slices, and determine a network slice corresponding to the found group of configuration information as a target network slice; and
a sending module (303) configured to send a response message for the slice selection request, wherein the response message carries identification information of the target network slice.

7. A network slice selection function network element, comprising:
at least one processor (401);
and a memory (402) communicatively connected to the at least one processor (401),
wherein the memory (402) stores instructions executable by the at least one processor (401), and the instructions, when executed by the at least one processor (401), enable the at least one processor (401) to execute the network slice selection method of any one of claims 1 to 5.

8. A network slice selection system, comprising: a plurality of network slices in a core network, and the network slice selection function network element of claim 7, wherein the network slice selection function network element is connected to each of the plurality of network slices in the core network.

9. A computer-readable storage medium storing a computer program which, when executed by a processor, implements the network slice selection method of any one of claims 1 to 5.

## Patentansprüche

1. Netzwerk-Slice-Auswahlverfahren, das auf ein Netzwerkelement einer Netzwerk-Slice-Auswahlfunktion, NSSF, anwendbar ist, das von einer Vielzahl von Netzwerk-Slices in einem Kernnetzwerk gemeinsam genutzt wird, wobei das Verfahren umfasst:
Empfangen einer Slice-Auswahlanforderung, wobei die Slice-Auswahlanforderung für das Anfordern der Auswahl eines Netzwerk-Slices für einen Roaming-Benutzer ausgelegt ist und die Slice-Auswahlanforderung zu dem Roaming-Benutzer (101) gehörende Benutzerinformationen umfasst;
Durchsuchen, gemäß den Benutzerinformationen, einer vorgewählten Roaming-Richtlinie nach einer Gruppe von Konfigurationsinformationen, die mit den Benutzerinformationen übereinstimmen, wobei die Roaming-Richtlinie eine Vielzahl von Gruppen von Konfigurationsinformationen umfasst und jede Gruppe von Konfigurationsinformationen einem der Netzwerk-Slices entspricht;
Bestimmen eines Netzwerk-Slices, das der gefundenen Gruppe von Konfigurationsinformationen entspricht, als Zielnetzwerk-Slice (102); und
Senden einer Antwortnachricht für die Slice-Auswahlanforderung, wobei die Antwortnachricht Identifikationsinformationen des Zielnetzwerk-Slices (103) trägt.

2. Netzwerk-Slice-Auswahlverfahren nach Anspruch 1, wobei:
die Benutzerinformationen Informationen zur Unterstützung bei der Einzel-Netzwerk-Slice-Auswahl, S-NSSAI, für ein Netzwerk-Slice, in dem sich der Benutzer aktuell befindet, und eine oder eine beliebige Kombination der folgenden Informationen umfassen: Standortinformationen des Benutzers, eine permanente Abonnementkennung, SUPI, des Benutzers oder Informationen über ein Netzwerkelement einer standardmäßigen Zugriffs- und Mobilitätsverwaltungsfunktion, AMF, an einem besuchten Standort des Benutzers; und
jede Gruppe von Konfigurationsinformationen S-NSSAI des entsprechenden Netzwerk-Slices und eine oder eine beliebige Kombination der folgenden Informationen umfassen:
Standortinformationen des entsprechenden Netzwerk-Slices, eine SUPI eines Teilnehmers des entsprechenden Netzwerk-Slices oder vorgewählte AMF-Informationen.

3. Netzwerk-Slice-Auswahlverfahren nach Anspruch 1, wobei:
Elemente von Konfigurationsinformationen in jeder Gruppe von Konfigurationsinformationen jeweils mit unterschiedlichen Prioritäten festgelegt sind; und
Durchsuchen, gemäß den Benutzerinformationen, der Roaming-Richtlinie nach einer Gruppe von Konfigurationsinformationen, die mit den Benutzerinformationen übereinstimmen, Folgendes umfasst:
sequenzielles Durchsuchen, in absteigender Reihenfolge der Prioritäten der Elemente von Konfigurationsinformationen, nach Konfigurationsinformationen, die mit den Benutzerinformationen übereinstimmen, bis die Anzahl der Gruppen von Konfigurationsinformationen, die mit den Benutzerinformationen übereinstimmen, 1 beträgt.

4. Netzwerk-Slice-Auswahlverfahren nach Anspruch 1, wobei das Durchsuchen, gemäß den Benutzerinformationen, der Roaming-Richtlinie nach einer Gruppe von Konfigurationsinformationen, die mit den Benutzerinformationen übereinstimmen, Folgendes umfasst:
Auswählen, als Reaktion auf das Auffinden einer Vielzahl von Gruppen von Konfigurationsinformationen, die mit den Benutzerinformationen in der Roaming-Richtlinie gemäß den Benutzerinformationen übereinstimmen, einer Gruppe von Konfigurationsinformationen nach dem Zufallsprinzip aus den aufgefundenen Gruppen von Konfigurationsinformationen, und
Verwenden der nach dem Zufallsprinzip ausgewählten Gruppe von Konfigurationsinformationen als Gruppe von Konfigurationsinformationen, die mit den Benutzerinformationen übereinstimmt.

5. Netzwerk-Slice-Auswahlverfahren nach Anspruch 1, wobei die Identifikationsinformationen des Ziel-Netzwerk-Slices S-NSSAI des Ziel-Netzwerk-Slices und zugeordnete S-NSSAI umfassen.

6. Netzwerk-Slice-Auswahlvorrichtung, die von einer Vielzahl von Netzwerk-Slices in einem Kernnetzwerk gemeinsam genutzt wird, wobei die Auswahlvorrichtung umfasst:
ein Empfangsmodul (301), das dazu konfiguriert ist, eine Slice-Auswahlanforderung zu empfangen, wobei die Slice-Auswahlanforderung zum Anfordern der Auswahl eines Netzwerk-Slices für einen Roaming-Benutzer ausgelegt ist und die Slice-Auswahlanforderung zu dem Roaming-Benutzer gehörende Benutzerinformationen umfasst;
ein Auswahlmodul (302), das dazu konfiguriert ist, eine vorgewählte Roaming-Richtlinie nach einer Gruppe von Konfigurationsinformationen, die mit den Benutzerinformationen übereinstimmen, zu durchsuchen, wobei die Roaming-Richtlinie eine Vielzahl von Gruppen von Konfigurationsinformationen umfasst und jede Gruppe von Konfigurationsinformationen einem der Netzwerk-Slices entspricht, und ein Netzwerk-Slice, das der aufgefundenen Gruppe von Konfigurationsinformationen entspricht, als Zielnetzwerk-Slice zu bestimmen; und
ein Sendemodul (303), das dazu konfiguriert ist, eine Antwortnachricht für die Slice-Auswahlanforderung zu senden, wobei die Antwortnachricht Identifikationsinformationen des Zielnetzwerk-Slices trägt.

7. Netzwerkelement einer Netzwerk-Slice-Auswahlfunktion, umfassend:
mindestens einen Prozessor (401);
und einen Speicher (402), der kommunikativ mit dem mindestens einen Prozessor (401) verbunden ist,
wobei der Speicher (402) Anweisungen speichert, die von dem mindestens einen Prozessor (401) ausführbar sind, und die Anweisungen, wenn von dem mindestens einen Prozessor (401) ausgeführt, es dem mindestens einen Prozessor (401) ermöglichen, das Netzwerk-Slice-Auswahlverfahren nach einem der Ansprüche 1 bis 5 auszuführen.

8. Netzwerk-Slice-Auswahlsystem, umfassend: eine Vielzahl von Netzwerk-Slices in einem Kernnetzwerk und das Netzwerkelement der Netzwerk-Slice-Auswahlfunktion nach Anspruch 7, wobei das Netzwerkelement der Netzwerk-Slice-Auswahlfunktion mit jedem der Vielzahl von Netzwerk-Slices in dem Kernnetzwerk verbunden ist.

9. Computerlesbares Speichermedium, auf dem ein Computerprogramm gespeichert ist, das bei Ausführung durch einen Prozessor das Netzwerk-Slice-Auswahlverfahren nach einem der Ansprüche 1 bis 5 implementiert.

## Revendications

1. Procédé de sélection de tranche de réseau applicable à un élément de réseau de fonction de sélection de tranche de réseau, NSSF, partagé par une pluralité de tranches de réseau dans un réseau central, le procédé comprenant :
la réception d'une demande de sélection de tranche, ladite demande de sélection de tranche étant adoptée pour demander de sélectionner une tranche de réseau pour un utilisateur itinérant, et ladite demande de sélection de tranche comprenant des informations d'utilisateur appartenant à l'utilisateur itinérant (101) ;
la recherche, selon les informations d'utilisateur, d'une politique d'itinérance prédéfinie pour un groupe d'informations de configuration correspondant aux informations d'utilisateur, ladite politique d'itinérance comprenant une pluralité de groupes d'informations de configuration, et
chaque groupe d'informations de configuration correspondant à l'une des tranches de réseau ;
la détermination d'une tranche de réseau correspondant au groupe d'informations de configuration trouvé en tant que tranche de réseau cible (102) ; et
l'envoi d'un message de réponse pour la demande de sélection de tranche, ledit message de réponse portant des informations d'identification de la tranche de réseau cible (103).

2. Procédé de sélection de tranche de réseau de la revendication 1,
lesdites informations d'utilisateur comprenant des informations d'assistance de sélection de tranche de réseau unique, S-NSSAI, pour une tranche de réseau au niveau de laquelle l'utilisateur est actuellement situé, et l'une ou une quelconque combinaison des informations suivantes : des informations d'emplacement de l'utilisateur, un identifiant permanent d'abonnement, SUPI, de l'utilisateur, ou des informations concernant un élément de réseau de fonction de gestion d'accès et de mobilité par défaut, AMF, au niveau d'un emplacement visité de l'utilisateur ; et
chaque groupe d'informations de configuration comprenant S-NSSAI de la tranche de réseau correspondante, et l'une ou une quelconque combinaison des informations suivantes : des informations d'emplacement de la tranche de réseau correspondante, un SUPI d'un abonné de la tranche de réseau correspondante, ou des informations AMF prédéfinies.

3. Procédé de sélection de tranche de réseau de la revendication 1,
lesdits éléments d'informations de configuration dans chaque groupe d'informations de configuration étant définis respectivement avec des priorités différentes ; et
ladite recherche, selon les informations d'utilisateur, de la politique d'itinérance pour un groupe d'informations de configuration correspondant aux informations d'utilisateur comprenant :
la recherche séquentielle, par ordre décroissant des priorités des éléments d'informations de configuration, d'informations de configuration correspondant aux informations d'utilisateur jusqu'à ce que le nombre de groupes d'informations de configuration correspondant aux informations d'utilisateur soit de 1.

4. Procédé de sélection de tranche de réseau de la revendication 1, ladite recherche, selon les informations d'utilisateur, de la politique d'itinérance pour un groupe d'informations de configuration correspondant aux informations d'utilisateur comprenant :
la sélection, en réponse à la trouvaille d'une pluralité de groupes d'informations de configuration correspondant aux informations d'utilisateur dans la politique d'itinérance selon les informations d'utilisateur, d'un groupe d'informations de configuration de manière aléatoire à partir des groupes d'informations de configuration trouvés ; et
l'utilisation du groupe d'informations de configuration sélectionné de manière aléatoire en tant que groupe d'informations de configuration correspondant aux informations d'utilisateur.

5. Procédé de sélection de tranche de réseau de la revendication 1, lesdites informations d'identification de la tranche de réseau cible comprenant les S-NSSAI de la tranche de réseau cible et les S-NSSAI mises en correspondance.

6. Appareil de sélection de tranche de réseau, qui est partagé par une pluralité de tranches de réseau dans un réseau central, l'appareil de sélection comprenant :
un module de réception (301) configuré pour recevoir une demande de sélection de tranche, ladite demande de sélection de tranche étant adoptée pour demander de sélectionner une tranche de réseau pour un utilisateur itinérant, et ladite demande de sélection de tranche comprenant des informations d'utilisateur appartenant à l'utilisateur itinérant ;
un module de sélection (302) configuré pour rechercher une politique d'itinérance prédéfinie pour un groupe d'informations de configuration correspondant aux informations d'utilisateur, ladite politique d'itinérance comprenant une pluralité de groupes d'informations de configuration, et
chaque groupe d'informations de configuration correspondant à l'une des tranches de réseau, et déterminer une tranche de réseau correspondant au groupe d'informations de configuration trouvé en tant que tranche de réseau cible ; et
un module d'envoi (303) configuré pour envoyer un message de réponse pour la demande de sélection de tranche, ledit message de réponse portant des informations d'identification de la tranche de réseau cible.

7. Elément de réseau de fonction de sélection de tranche de réseau, comprenant :
au moins un processeur (401) ;
une mémoire (402) connectée en communication à l'au moins un processeur (401),
ladite mémoire (402) stockant des instructions exécutables par l'au moins un processeur (401), et
lesdites instructions, lorsqu'elles sont exécutées par l'au moins un processeur (401), permettant à l'au moins un processeur (401) d'exécuter le procédé de sélection de tranche de réseau de l'une quelconque des revendications 1 à 5.

8. Système de sélection de tranche de réseau, comprenant : une pluralité de tranches de réseau dans un réseau central, et l'élément de réseau de fonction de sélection de tranche de réseau de la revendication 7, ledit élément de réseau de fonction de sélection de tranche de réseau étant connecté à chacune de la pluralité de tranches de réseau dans le réseau central.

9. Support de stockage lisible par ordinateur stockant un programme informatique qui, lorsqu'il est exécuté par un processeur, met en oeuvre le procédé de sélection de tranche de réseau de l'une quelconque des revendications 1 à 5.
